# EUROPÄISCHE PATENTSCHRIFT

(11) **EP 1 636 984 B1**
(45) Veröffentlichungstag und Bekanntmachung des Hinweises auf die Patenterteilung: **28.03.2012**
(21) Anmeldenummer: 04736962.4
(22) Anmeldetag: 17.06.2004
(51) Int. Cl.: G01V 5/00

(54) **VORRICHTUNG ZUM ERFASSEN VON GEGENSTÄNDEN MIT EINER FÖRDEREINRICHTUNG FÜR DIE GEGENSTÄNDE UND MIT EINER BILDERFASSUNGSEINRICHTUNG**
DEVICE FOR THE DETECTION OF OBJECTS HAVING TRANSPORT MEANS FOR THE OBJECTS AND AN IMAGE DETECTOR
SYSTEME DE DETECTION D'OBJETS AVEC DES MOYENS DE TRANSPORT POUR LES OBJETS ET AVEC UN CAPTEUR D'IMAGE

(30) Priorität: 17.06.2003 AT 9402003
(43) Veröffentlichungstag der Anmeldung: 22.03.2006
(73) Patentinhaber: Unger, Roland, 7412 Wolfau Nr. 490 (AT)
(72) Erfinder: Unger, Roland, 7412 Wolfau Nr. 490 (AT)
(74) Vertreter: Hübscher, Helmut
(86) Internationale Anmeldenummer: PCT/AT2004/000209
(87) Internationale Veröffentlichungsnummer: WO 2004/112377

(56) Entgegenhaltungen:
- WO-A-94/09920
- WO-A-97/18462
- US-A- 4 122 783
- US-A- 4 385 469
- US-A- 5 523 739
- US-A1- 2003 086 525

## Beschreibung

Die Erfindung bezieht sich auf eine Vorrichtung zum Erfassen von Gegenständen entsprechend dem Oberbegriff des Anspruchs 1.

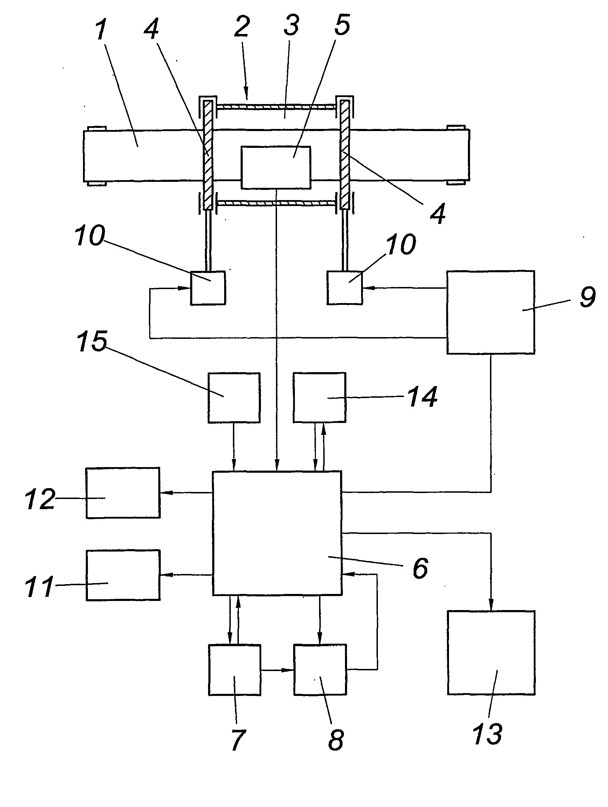

Zum Überprüfen der Zulässigkeit der Mitnahme unterschiedlicher Gegenstände im Bereich von Personenschleusen ist es bekannt, die auf einer Fördereinrichtung abgelegten, zum Teil verpackten Gegenstände mit Hilfe von Röntgenstrahlen auf einem Bildschirm abzubilden. Durch eine visuelle Überwachung der auf einem Bildschirm abgebildeten Gegenstände wird vom Betrachter des Bildschirmes entschieden, ob die abgebildeten Gegenstände zulässig oder unzulässig sind. Kann die Abbildung eines Gegenstandes nicht einem bekannten Gegenstand zugeordnet werden, so kann dieser nicht identifizierte Gegenstand ausgeschieden und einer weiteren Überprüfung zugeführt werden. Nachteilig bei dieser bekannten Erfassung von Gegenständen anhand von auf einem Bildschirm angezeigten Abbildungen dieser Gegenstände ist vor allem, daß die Gegenstandserfassung von der Aufmerksamkeit des Bildschirmbetrachters abhängt, was zu einer lückenhaften Überwachung führen kann, insbesondere bei der Überwachung einer Vielzahl von Gegenständen.

Um beispielsweise in einem Gepäck verborgene Gegenstände automatisch erfassen zu können, ist es bereits bekannt (WO 97/18462 A1), eine Bilderfassungseinrichtung vorzusehen, die eine Sende- und Empfangseinheit für von den zu erfassenden Gegenständen zumindest teilweise absorbierbare Wellen oder Strahlen zur Erfassung von Bilddaten der auf einer Fördereinrichtung transportierten Gegenstände aufweist und mit einer an einen Büddatenspeicher für vorgegebene Gegenstände angeschlossenen Auswerteschaltung verbunden ist, die eine Vergleicherstufe für die von der Bilderfassungseinrichtung übertragenen Bilddaten mit den aus dem Bilddatenspeicher ausgelesenen Bilddaten umfaßt, so daß die erfaßten Bilddaten mit einem in Abhängigkeit vom Ergebnis der Vergleicherstufe ausgewählten Kommentar versehen werden können. Damit ist es möglich nach vorgegebenen Gegenständen zu suchen, nicht aber nach Gegenständen, deren Bilddaten nicht im Bilddatenspeicher abgelegt sind.

Aus der WO 94/09920 A1 ist es bekannt, zum Sortieren von auf einem Förderband geförderten Fischen deren Größenverhältnisse, Formen und Farben mit einer Kamera zu erfassen und anhand eines Vergleichs mit abgespeicherten Daten einer Sorte zuzuordnen, um die Fische nach der erfaßten Sorte aufteilen zu können. Die nicht einer bestimmten Sorte zuordbaren Fische werden gemeinsam gesammelt, ohne sie einer näheren Bestimmung zuzuführen.

Schließlich ist es bekannt (US 2003/086525), Auswerteschaltungen in Kombination mit Anzeigeeinrichtungen einzusetzen, wobei die Auswerteschaltung ein Ausgangssignal in Abhängigkeit vom Ausgangssignal einer Vergleicherstufe ansteuert.

Der Erfindung liegt somit die Aufgabe zugrunde, eine Vorrichtung zum Erfassen von Gegenständen mit vergleichsweise einfachen konstruktiven Mitteln so auszugestalten, daß eine von der Aufmerksamkeit eines Bildschirmbetrachters weitgehend unabhängige und damit im wesentlichen lückenlose Überwachung der auf einer Fördereinrichtung abgelegten Gegenstände sichergestellt werden kann.

Die Erfindung löst die gestellte Aufgabe mit den Merkmalen des Anspruches 1.

Da zufolge dieser Maßnahmen die im Bilddatenspeicher abgelegten Bilddaten vorgegebener Gegenstände über eine Vergleicherstufe mit den über die Bilderfassungseinrichtung aufgenommenen und durch die Auswerteschaltung ausgewerteten Bilddaten verglichen werden, kann ein Großteil der von der Bilderfassungseinrichtung aufgenommenen Gegenstände anhand der erfaßten Bilddaten durch den Vergleich mit abgespeicherten Bilddaten entsprechender Gegenstände als zulässig oder nicht zulässig qualifiziert werden, ohne daß es einer Bildschirmüberwachung durch einen Betrachter bedarf. Nur für den Fall, daß aufgenommene Bilddaten eines Gegenstandes nicht den abgespeicherten Bilddaten vorgegebener Gegenstände zugeordnet werden können, wird eine Anzeigeeinrichtung über die Auswerteschaltung angesteuert, um zusätzliche Maßnahmen zur Erkennung des nicht identifizierten Gegenstandes einleiten zu können. Eine Möglichkeit besteht darin, die auf einem Bildschirm angezeigten Bilddaten des nicht identifizierten Gegenstandes durch einen menschlichen Betrachter zu beurteilen, der dann die weiteren Entscheidungen trifft und allenfalls von Hand aus in vorgegebene Steuerabläufe eingreift. Da davon ausgegangen werden kann, daß die über die Vergleicherstufe bestimmten Gegenständen zuordbaren Bilddaten eine fehlerfreie Überwachung dieser Gegenstände erlauben, wird der Einsatz eines menschlichen Begutachters nur in Ausnahmefällen notwendig, in denen die volle Aufmerksamkeit eines Bildschirmbetrachters vorausgesetzt werden kann, so daß eine weitgehend lückenlose Erfassung der auf der Fördereinrichtung abgelegten Gegenstände erreicht wird.

Um einen unbefugten Zugriff auf Gegenstände zu unterbinden, die der Fördereinrichtung zur Bilderfassung aufgegeben wurden, kann die Fördereinrichtung eine Sicherheitsschleuse durchsetzen, wobei die Auswerteschaltung eine Steuereinrichtung für die Sicherheitsschleuse in Abhängigkeit vom Ausgangssignal der Vergleicherstufe ansteuert. Wird ein Gegenstand aufgrund seiner aufgenommenen Bilddaten als unzulässig bewertet oder können aufgenommene Bilddaten nicht einem vorgegebenen Gegenstand zugeordnet werden, so kann die Sicherheitsschleuse über die Steuereinrichtung gesperrt werden, bis von Hand aus in den Steuerungsablauf eingegriffen wird.

Die Zulässigkeit der Gegenstände kann in Abhängigkeit von Personen bewertet werden, die unterschiedliche Berechtigungen zum Führen dieser Gegenstände haben. In einem solchen Fall können den Bilddaten im Bilddatenspeicher in einem Kenndatenspeicher abgelegte Kennungen zugeordnet werden. Ist die Auswerteschaltung einerseits an den Kenndatenspeicher und anderseits an eine Leseeinrichtung für Kennungen angeschlossen, so kann die Zulässigkeit von Gegenständen, die mit Hilfe ihrer aufgenommenen Bilddaten erfaßt werden, in bezug auf die jeweils eingelesene Kennung unterschiedlich beurteilt werden. Da es in diesem Zusammenhang nicht auf den Aufbau der Kennung, sondern auf die Zuordnung der Kennung zu Bilddaten bestimmter Gegenstände ankommt, können die Kennungen unterschiedlich ausfallen und beispielsweise aus elektronischen oder biometrischen Daten bestehen.

Wird die Vorrichtung zum Erfassen von Gegenständen auf einer Fördereinrichtung in Verbindung mit einer Personenschleuse eingesetzt, so kann vorteilhaft die Steuereinrichtung für die Personenschleuse über die Auswerteschaltung in Abhängigkeit vom Ausgangssignal der Vergleicherstufe angesteuert werden, um beim Erfassen eines nicht zulässigen Gegenstandes oder von Bilddaten, die keinem vorgegebenen Gegenstand zugeordnet werden können, die Personenschleuse zu sperren.

### Kurze Beschreibung der Zeichnung

In der Zeichnung ist der Erfindungsgegenstand beispielsweise dargestellt, und zwar wird eine erfindungsgemäße Vorrichtung zum Erfassen von Gegenständen in einem schematischen Blockschaltbild gezeigt.

### Wege zur Ausführung der Erfindung

Die dargestellte Vorrichtung zum Erfassen von Gegenständen weist eine Fördereinrichtung 1, beispielsweise ein umlaufendes Förderband oder einen Rollgang, auf, die eine Sicherheitsschleuse 2 durchsetzt. Diese Sicherheitsschleuse 2 wird durch eine Schleusenkammer 3 gebildet, die in Förderrichtung der Fördereinrichtung 1 durch zwei Türen 4 abgeschlossen wird und eine Bilderfassungseinrichtung 5 aufnimmt. Diese Bilderfassungseinrichtung 5 umfaßt eine Sende- und Empfangseinheit für von den zu erfassenden Gegenständen reflektierbare und/oder zumindest teilweise absorbierbare Wellen oder Strahlen zur Aufnahme von Bilddaten der Gegenstände. Die Sende- und Empfangseinheit kann je nach den Anforderungen unterschiedlich aufgebaut sein und beispielsweise mit Röntgenstrahlen, Mikrowellen, oder Schallwellen arbeiten. Die von der Bilderfassungseinrichtung 5 aufgenommenen Bilddaten werden einer Auswerteschaltung 6 zugeleitet, die an einen Bilddatenspeicher 7 für Bilddaten vorgegebener Gegenstände angeschlossen ist. Die über die Auswerteschaltung 6 aus dem Bilddatenspeicher 7 ausgelesenen Bilddaten können in einer Vergleicherstufe 8 mit den in der Auswerteschaltung 6 ausgewerteten, von der Bilderfassungseinrichtung 5 aufgenommenen Bilddaten verglichen werden, um anhand der aufgenommenen Bilddaten den erfaßten Gegenstand den abgespeicherten Bilddaten eines vorgegebenen Gegenstandes zur Identifizierung des erfaßten Gegenstandes zuzuordnen. Werden die durch die Bilderfassungseinrichtung 5 erfaßten Gegenstände auf der Fördereinrichtung 1 identifiziert und programmbedingt über die Auswerteschaltung 6 als zulässig bewertet, so wird über die Auswerteschaltung 6 eine Steuereinrichtung 9 für die Stelltriebe 10 der Schleusentüren 4 angesteuert, um die ausgangsseitige Tür 4 der Sicherheitsschleuse 2 zu öffnen und die Gegenstände aus der Schleusenkammer 3 durch die Fördereinrichtung 1 auszutragen. Nach einem Schließen der ausgangsseitigen und einem Öffnen der eingangsseitigen Tür 4 steht die Sicherheitsschleuse 2 zur Aufnahme neuer Gegenstände zur Verfügung.

Wird über die Auswerteschaltung 6 ein in der Sicherheitsschleuse 2 aufgenommener Gegenstand aufgrund des Vergleichs mit abgespeicherten Bilddaten vorgegebener Gegenstände als nicht zulässig bewertet, so bleiben die Türen 4 der Sicherheitsschleuse 2 geschlossen. Außerdem wird eine Anzeigeeinrichtung 11 über die Auswerteschaltung 6 angesteuert, so daß aufgrund der Anzeige eines nicht zulässigen Gegenstandes von Hand aus in den weiteren Steuerungsablauf eingegriffen werden kann. Auf einem an die Auswerteschaltung 6 angeschlossenen Bildschirm 12 zur Anzeige der aufgenommenen Bilddaten kann die Zulässigkeit des erfaßten Gegenstandes durch einen menschlichen Betrachter zusätzlich überprüft werden, um dann eine Entscheidung für das weitere Vorgehen zu treffen. Die Anzeigeeinrichtung 11 und der Bildschirm 12 können in einem gemeinsamen Gerät zusammengefaßt werden.

Ist die Vorrichtung zum Erfassen von Gegenständen in Verbindung mit einer Personenschleuse angeordnet, so kann über die Auswerteschaltung 6 zusätzlich die Steuereinrichtung 13 für die Personenschleuse angesteuert werden, um auch die Personensperre in Abhängigkeit vom Ausgangssignal der Vergleicherstufe 8 betätigen zu können.

Für den Fall, daß die über die Bilderfassungseinrichtung 5 aufgenommenen und in der Auswerteschaltung 6 bearbeiteten Bilddaten der erfaßten Gegenstände nicht den Bilddaten aus dem Bilddatenspeicher 7 zugeordnet werden können, wird ebenfalls die Steuereinrichtung 9 für die Sicherheitsschleuse 2 im Sinne eines Sperrens der Türen 4 beaufschlagt und die Aufnahme eines nicht identifizierten Gegenstandes in der Anzeigeeinrichtung 11 angezeigt. Über die Bildschirmdarstellung der aufgenommenen Bilddaten kann dann von einem menschlichen Betrachter versucht werden, den Gegenstand zu identifizieren und davon abhängig in die weitere Steuerung einzugreifen.

Soll die Zulässigkeit der Mitnahme von Gegenständen von einer auf Einzelpersonen oder Personengruppen abgestellten Berechtigung abhängig gemacht werden, so können den im Bilddatenspeicher 7 abgelegten Bilddaten Kennungen aus einem Kenndatenspeicher 14 zugeordnet werden. Wird folglich über eine Leseeinrichtung 15 für Kennungen der Auswerteschaltung 6 eine bestimmte Kennung beispielsweise in Form von elektronischen oder biometrischen Daten vorgelegt, so wird die Zulässigkeit der erfaßten Gegenstände in Abhängigkeit von der Kennung überprüft, was eine zusätzliche Sicherheit mit sich bringt.

## Patentansprüche

1. Vorrichtung zum Erfassen von Gegenständen mit einer Fördereinrichtung (1) für die Gegenstände, mit einer Bilderfassungseinrichtung (5), die eine Sende- und Empfangseinheit für von den zu erfassenden Gegenständen reflektierbare und/oder zumindest teilweise absorbierbare Wellen oder Strahlen zur Erfassung von Bilddaten der Gegenstände auf der Fördereinrichtung (1) aufweist, und mit einem an die Bilderfassungseinrichtung (5) angeschlossenen Bildschirm (12) zur Anzeige der aufgenommenen Bilddaten, wobei die Bilderfassungseinrichtung (5) mit einer an einen Bilddatenspeicher (7) für vorgegebene Gegenstände angeschlossenen Auswerteschaltung (6) verbunden ist, die eine Vergleicherstufe (8) für die von der Bilderfassungseinrichtung (5) übertragenen Bilddaten mit den aus dem Bilddatenspeicher (7) ausgelesenen Bilddaten umfaßt, und die Vorrichtung eine Anzeigeeinrichtung (11) aufweist, wobei die Auswerteschaltung (6) die Anzeigeeinrichtung (11) in Abhängigkeit vom Ausgangssignal der Vergleicherstufe (8) ansteuert, **dadurch gekennzeichnet, daß** die Auswerteschaltung (6) weiter den Bildschirm (12) zur Anzeige von aufgenommenen, aber nicht den abgespeicherten Bilddaten entsprechenden Bilddaten ansteuert.

2. Vorrichtung nach Anspruch 1, **dadurch gekennzeichnet, daß** die Fördereinrichtung (1) eine Sicherheitsschleuse (2) durchsetzt und daß die Auswerteschaltung (6) eine Steuereinrichtung (9) für die Sicherheitsschleuse (2) in Abhängigkeit vom Ausgangssignal der Vergleicherstufe (8) ansteuert.

3. Vorrichtung nach Anspruch 1 oder 2, **dadurch gekennzeichnet, daß** den Bilddaten im Bilddatenspeicher (7) in einem Kenndatenspeicher (14) abgelegte Kennungen zugeordnet sind und daß die Auswerteschaltung (6) einerseits an den Kenndatenspeicher (14) und anderseits an eine Leseeinrichtung (15) für Kennungen angeschlossen ist.

4. Vorrichtung nach einem der Ansprüche 1 bis 3, **dadurch gekennzeichnet, daß** über die Auswerteschaltung (6) eine Personenschleuse ansteuerbar ist.

## Claims

1. Device for the detection of objects, having a conveyor device (1) for the objects, having an image capture device (5) which has a transmission and reception unit for beams or waves which can be reflected and/or at least partially absorbed by the objects to be detected in order to capture image data of the objects on the conveyor device (1), and having a screen (12) connected to the image capture device (5) to display the received image data, wherein the image capture device (5) is connected to an evaluation circuit (6) which is connected to an image data memory (7) for prespecified objects and which includes a step (8) for comparing the image data transmitted from the image capture device (5) with the image data read from the image data memory (7), and the device has a display device (11), wherein the evaluation circuit (6) controls the display device (11) in dependence upon the output signal of the comparison step (8), **characterised in that** the evaluation circuit (6) also controls the screen (12) to display image data which have been received but do not correspond to the stored image data.

2. Device as claimed in claim 1, **characterised in that** the conveyor device (1) passes through a security gate (2) and that the evaluation circuit (6) controls a control device (9) for the security gate (2) in dependence upon the output signal of the comparison step (8).

3. Device as claimed in claim 1 or 2, **characterised in that** the image data in the image data memory (7) are allocated characteristics stored in a characteristic data memory (14) and that the evaluation circuit (6) is connected on the one hand to the characteristic data memory (14) and on the other hand to a reading device (15) for characteristics.

4. Device as claimed in any one of claims 1 to 3, **characterised in that** a passenger gate can be controlled by means of the evaluation circuit (6).

## Revendications

1. Système de détection d'objets avec un dispositif de transport (1) pour les objets, avec un dispositif d'acquisition d'images (5) qui présente une unité d'émission et de réception pour des ondes ou des rayons pouvant être réfléchis, et/ou, au moins en partie, absorbés par les objets à détecter afin d'acquérir des données-image des objets sur le dispositif de transport (1), et avec un écran (12) relié au dispositif d'acquisition d'images (5) pour affichage des données-image enregistrées, le dispositif d'acquisition d'images (5) étant relié à un circuit d'évaluation (6) raccordé à une unité de stockage de données-image (7) pour des objets prédéterminés et comprenant un étage comparateur (8) pour les données-image transmises par le dispositif d'acquisition d'images (5) avec les données-image extraites de l'unité de stockage de données-image (7), et le système présentant un dispositif d'affichage (11), le circuit d'évaluation (6) commandant le dispositif d'affichage (11) en fonction du signal de sortie de l'étage comparateur (8), **caractérisé en ce que** le circuit d'évaluation (6) commande additionnellement l'écran (12) pour affichage des données-image enregistrées mais non sauvegardées des données-image correspondantes.

2. Système selon la revendication 1, **caractérisé en ce que** le dispositif de transport (1) traverse un portique de détection (2) et **en ce que** le circuit d'évaluation (6) commande un dispositif de commande (9) pour le portique de détection (2) en fonction du signal de sortie de l'étage comparateur (8).

3. Système selon la revendication 1 ou 2, **caractérisé en ce que** des identifications stockées sont affectées aux données-image dans l'unité de stockage de données-image (7) dans une mémoire de caractéristiques (14) et **en ce que** le circuit d'évaluation (6) est raccordé, d'une part, à la mémoire de caractéristiques (14) et d'autre part, à un lecteur (15) pour les identifications.

4. Système selon l'une des revendications 1 à 3, **caractérisé en ce qu'**un sas pour le passage de personnes peut être commandé par le biais du circuit d'évaluation (6).
